# FASCICULE DE BREVET EUROPEEN

(11) **EP 0 633 088 B1**
(45) Date de publication et mention de la délivrance du brevet: **18.09.1996**
(21) Numéro de dépôt: 94401528.8
(22) Date de dépôt: 04.07.1994
(51) Int. Cl.: B23H 3/08, C25F 3/02, C25F 3/14, C25F 7/00, G21C 21/00

(54) **Procédé et dispositif d'usinage électrochimique de matériaux métalliques et notamment de la surface interne de traversées de fond de cuve d'un réacteur nucléaire**
Verfahren und Vorrichtung zum elektrochemischen Ätzen von metallischen Werkstoffen und zwar insbesondere der Innenseite der Böden von Kernreaktorbehältern
Process and apparatus for electrochemically etching metallic materials in particular the inner bottom surface of nuclear reactor vessels

(30) Priorité: 08.07.1993 FR 9308433
(43) Date de publication de la demande: 11.01.1995
(73) Titulaire: FRAMATOME, 92400 Courbevoie (FR)
(72) Inventeur: Guillermier, Pierre, D-69006 Lyon (FR); Blocquel, Alain, D-69570 Dardilly (FR)
(74) Mandataire: Bouget, Lucien

(56) Documents cités:
- EP-A- 0 352 594
- DE-A- 2 232 197
- DATABASE WPI Derwent Publications Ltd., London, GB; AN 91-345095 & SU-A-1 634 408 (IVANOV CHEM TECHN)
- DATABASE WPI Derwent Publications Ltd., London, GB; AN 87-121166 & SU-A-1 255 325 (IVAN CHEM TECH INS)
- DATABASE WPI Derwent Publications Ltd., London, GB; AN 87-038273 & FR-A-2 585 817 (FRAMATOME)

## Description

L'invention concerne un procédé d'usinage électrochimique avec enlèvement de matière de matériaux métalliques appartenant notamment au groupe comprenant les alliages de nickel et les aciers inoxydables et en particulier de la surface interne cylindrique d'une pièce tubulaire, par exemple de la surface intérieure d'une traversée de fond de cuve ou d'un adaptateur de traversée de couvercle d'un réacteur nucléaire.

Les réacteurs nucléaires à eau sous pression comportent généralement une cuve renfermant le coeur du réacteur qui est plongé dans l'eau sous pression de refroidissement du réacteur. La cuve du réacteur de forme générale cylindrique comporte un couvercle de forme hémisphérique qui peut être rapporté sur sa partie supérieure.

Le fond bombé de la cuve est percé d'ouvertures au niveau de chacune desquelles est fixée par soudure une pièce tubulaire de traversée.

Ces pénétrations de fond de cuve comportent une extrémité en saillie sous le fond bombé qui est reliée à un conduit de mesure souple permettant de joindre le fond de la cuve à une salle d'instrumentation disposée dans la structure du bâtiment du réacteur. Chacun des conduits de mesure et la pénétration de fond de cuve correspondante assurent le passage d'un doigt de gant dans lequel se déplace une sonde de mesure fixée à l'extrémité d'un élément flexible de grande longueur et son introduction à l'intérieur de la cuve et du coeur pour effectuer des mesures, par exemple des mesures de flux neutronique ou de température, à l'intérieur du coeur, pendant le fonctionnement du réacteur.

De manière à accroître la fiabilité et la sûreté de fonctionnement des réacteurs nucléaires et pour prolonger la durée de vie de ces réacteurs, les exploitants sont amenés à effectuer des contrôles de plus en plus nombreux des différents éléments constituant le réacteur nucléaire et, le cas échéant, des réparations de défauts qui ont pu être décelés.

En particulier, il peut être nécessaire de contrôler l'état des pièces de traversée de fond de cuve (et de traversée du couvercle) pour s'assurer de l'intégrité de ces pièces après un certain temps de fonctionnement du réacteur, en particulier dans la zone où ces pièces de traversée sont soudées sur le fond de la cuve.

Dans le cas où des défauts sont décelés sur la surface interne d'une pièce de traversée, ces défauts doivent être réparés, par exemple en déposant une couche d'un métal tel que du nickel sur la surface interne de la pièce de traversée, dans la zone présentant les défauts ou encore en réalisant un affouillement sur une certaine profondeur, par usinage avec enlèvement de matière, de la zone présentant des défauts.

Les opérations de réparation des tubes de traversée de fond de cuve d'un réacteur nucléaire doivent être effectuées lors d'un arrêt du réacteur nucléaire. On démonte le couvercle de la cuve et on opère par l'intérieur de l'alésage de la pièce de traversée et à distance puisque les pièces sont situées en fond de cuve et sont fortement irradiées.

On a donc utilisé un procédé et un dispositif permettant de réaliser de manière simple, rapide et parfaitement contrôlée, avec un excellent état de surface, l'affouillement de la surface présentant des défauts, c'est-à-dire l'élimination du matériau de la pièce sur une profondeur limitée et parfaitement contrôlée de manière à générer une nouvelle surface exempte de défauts.

Dans ce but, la demande de brevet FR-A-92-09789 au nom de la demanderesse propose un procédé d'usinage de la surface interne cylindrique d'une pièce tubulaire telle qu'un adaptateur fixé sur le couvercle de la cuve d'un réacteur nucléaire à eau sous pression, par érosion sous l'effet d'un jet de liquide à grande vitesse renfermant éventuellement une matière abrasive pulvérulente.

Ce procédé peut être utilisé en particulier pour réaliser des réparations ou des traitements préventifs de la surface intérieure d'un adaptateur. Il conduit à une amélioration de l'état de surface mais ce procédé d'usinage est d'une mise en oeuvre délicate et ne permet pas de réaliser facilement un contrôle précis de l'épaisseur de matériau enlevée.

L'usinage électrochimique a surtout été développé dans le domaine de l'aéronautique dans les années 1958-1965 aux Etats-Unis et en Europe, du fait de l'emploi dans ce domaine de matériaux difficilement usinables par les procédés d'usinage conventionnels tels que les métaux et alliages réfractaires à base de nickel ou cobalt ou les alliages de titane.

Actuellement, l'aéronautique fait appel à ce procédé notamment pour l'usinage d'aubes ; l'automobile l'utilise pour la réalisation de gravures de matrices d'estampage et de divers types de pièces telles que des bielles, des porte-fusées et des culbuteurs, fabriquées en grandes séries dans des formes et des matières spécifiques.

Les électrolytes les plus couramment employés pour l'usinage de la plupart des métaux et alliages, dont les aciers et les alliages réfractaires à base de nickel ou de cobalt, sont des solutions aqueuses de nitrate de sodium ou de chlorure de sodium.

D'autres électrolytes comme des solutions acides ou basiques (NaOH, NH₄, NH₄NO₃) sont nécessaires pour l'usinage de certains métaux et alliages dont la dissolution est impossible dans le nitrate ou le chlorure de sodium.

On a également proposé, dans les SU-A-1.634.408 et 1.255.325, d'utiliser des mélanges complexes renfermant en particulier du nitrate de sodium, du chlorure de lithium et du sulfate de cuivre ou de l'hydroxyde de lithium et du bichromate de sodium.

Un grand nombre de courbes de vitesses d'usinage et de courbes de polarisation ont été tracées et publiées.

Cependant, les procédés d'usinage électrochimique utilisant des électrolytes à base de sodium sont généralement néfastes pour la structure du métal.

En effet, le sodium sous forme d'un composé alcalin est une des principales causes potentielles de corrosion caustique du type intergranulaire des alliages à base nickel.

De plus, ces procédés ont un rendement faible et ne permettent pas d'usiner un matériau sur une épaisseur notable en un temps suffisamment court.

Le but de l'invention est donc de proposer un procédé d'usinage électrochimique avec enlèvement de matière de matériaux métalliques appartenant notamment au groupe comprenant les alliages de nickel et les aciers inoxydables consistant à mettre un électrolyte en circulation au contact de la surface à usiner, à porter ladite surface à un potentiel anodique, à mettre une électrode outil portée à un potentiel cathodique au voisinage de la pièce et à faire passer un courant entre l'électrode outil et la pièce à usiner, procédé qui ne détériore pas la structure métallique de la pièce, qui soit plus rapide que les procédés connus d'usinage électrochimique, efficace, précis et qui permette de réaliser un excellent état de surface.

Dans ce but, l'électrolyte mis en oeuvre contient comme substance active unique du nitrate de lithium (LiNO₃).
- De manière générale la concentration de l'électrolyte en nitrate de lithium est comprise entre 20g/l et 2350 g/l et
- la densité de courant traversant l'électrolyte est comprise entre 2 A/cm² et 4000 A/cm², et de préférence :
- la concentration de l'électrolyte en nitrate de lithium est comprise entre 50 g/l et 250 g/l et
- la densité de courant traversant l'électrolyte est comprise entre 5 A/cm² et 50 A/cm².

Le procédé suivant l'invention comprend des étapes de traitement des effluents et des moyens de mise en circulation des fluides ; il peut être appliqué à l'usinage électrochimique de la surface interne cylindrique d'une pièce tubulaire telle qu'une traversée de fond de cuve d'un réacteur nucléaire à eau sous pression, ou un adaptateur traversant le couvercle de la cuve, il est alors caractérisé en ce que l'électrolyte est mis en circulation dans un espace étanche de forme annulaire situé entre la cathode outil de forme cylindrique et la surface interne de la pièce à usiner.

Afin de bien faire comprendre l'invention, on va maintenant décrire à titre d'exemple non limitatif, en se référant aux figures jointes en annexe, un mode de mise en oeuvre d'un procédé suivant l'invention.

La figure 1 est une vue schématique en coupe par un plan vertical de la cuve d'un réacteur nucléaire à eau sous pression.

La figure 2 est une vue en coupe de la cellule d'électrolyse dans le cas de l'usinage d'une surface plane.

La figure 3 est une vue en coupe axiale d'une pièce tubulaire telle qu'une traversée de fond de cuve ou un adaptateur traversant le couvercle de la cuve et d'une cellule d'électrolyse selon l'invention.

La figure 4 est un schéma de la boucle d'usinage selon l'invention.

La figure 5 est une vue en coupe d'une traversée de fond de cuve, équipée d'un dispositif d'accostage télécommandé.

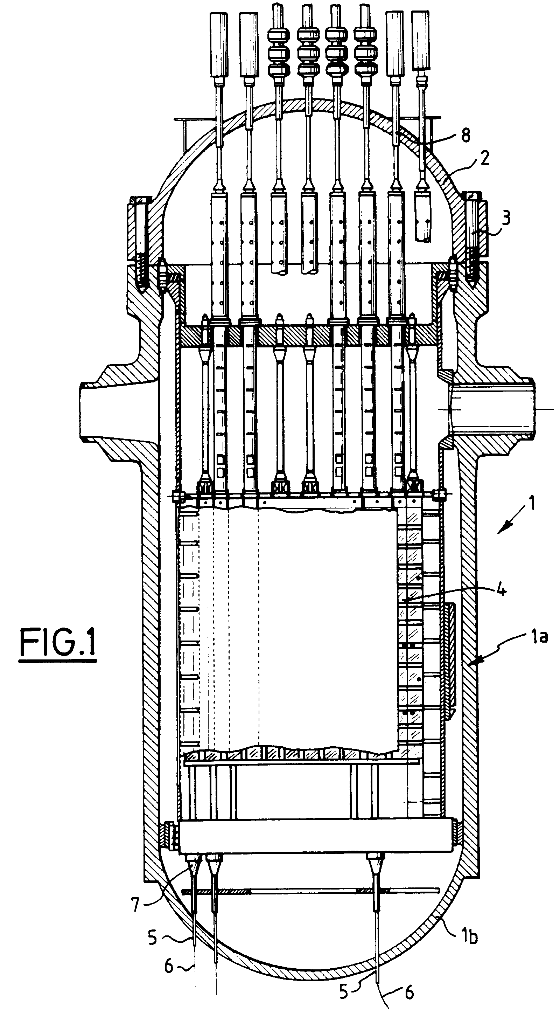

Sur la figure 1, on voit la cuve d'un réacteur nucléaire désignée de manière générale par le repère 1.

La cuve comporte une enveloppe externe 1a de forme sensiblement cylindrique fermée à son extrémité inférieure par un fond bombé 1b sensiblement hémisphérique.

L'extrémité supérieure de l'enveloppe 1a de la cuve 1 peut être fermée par un couvercle 2 sensiblement hémisphérique qui vient reposer sur une portée d'appui à la partie supérieure de l'enveloppe 1a et qui est fixé de manière étanche sur l'enveloppe 1a par des goujons de serrage 3. La cuve 1 renferme le coeur 4 du réacteur nucléaire constitué par des assemblages combustibles de forme prismatique disposés de manière juxtaposée.

Le fond 1b de la cuve est traversé par des pénétrations de fond de cuve 5 de forme tubulaire qui comportent des extrémités inférieures en saillie à l'extérieur du fond bombé 1b reliées chacune à un conduit de guidage d'instrumentation 6.

Au-dessus et à l'intérieur du fond bombé 1b, les pénétrations de fond de cuve 5 comportent chacune une extrémité supérieure saillante qui est engagée à l'intérieur d'une colonne de guidage d'instrumentation 7.

Les conduits de guidage 6, les pénétrations de fond de cuve 5 et les colonnes 7 permettent d'assurer le passage de doigts de gants renfermant des sondes de mesure, entre la salle d'instrumentation du réacteur nucléaire et le coeur 4 disposé à l'intérieur de la cuve.

Le couvercle 2 est traversé par des adaptateurs 8 assurant le passage de prolongateurs des barres de commande du réacteur.

Dans la zone où les pièces de traversée 5 sont soudées sur le fond de la cuve, l'état de contrainte est tel que l'intérieur des tubes subit une importante corrosion. Il faut alors réparer ces défauts en traitant la surface interne des tubes.

On décrira d'abord de manière générale l'usinage selon l'invention d'une pièce plane.

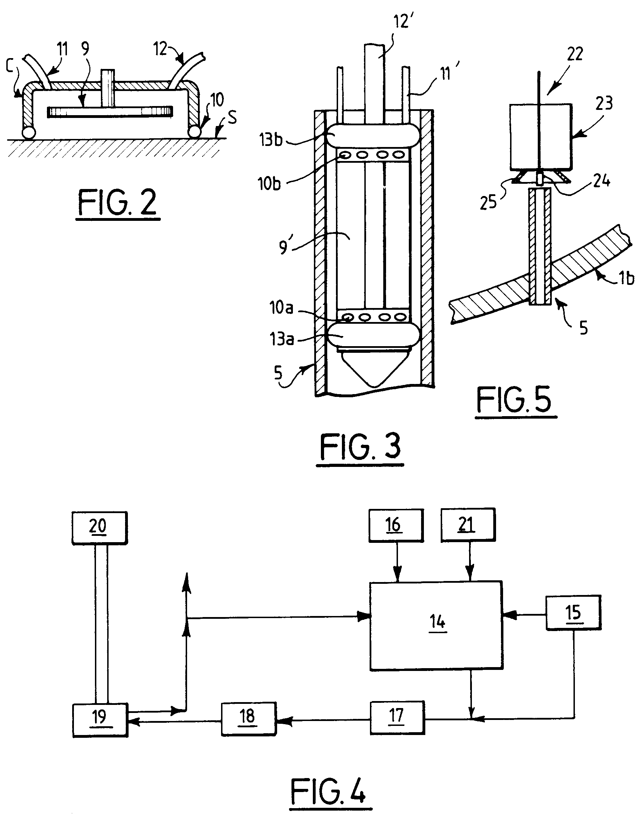

Sur la figure 2, la surface à usiner S est plane. Une électrode 9 est portée à un potentiel cathodique dans un espace délimité par une cloche C et rendu étanche par un joint 10. L'électrolyte est acheminé par un conduit 11 et ressort par un conduit 12. Le courant circule à travers l'électrolyte et engendre la réaction anodique de dissolution de la surface S avec formation de précipités d'hydroxydes. La cloche peut ensuite être déplacée sur la surface métallique afin d'usiner une autre zone.

Sur la figure 3, on voit une cellule d'électrolyse adaptée au traitement par usinage électrochimique d'une pièce tubulaire, par exemple une traversée de fond de cuve ou un adaptateur traversant le couvercle de la cuve dans lesquels on a décelé une avarie.

Cette cellule d'usinage est constituée de conduits souples, l'un 11' assurant l'alimentation en solution d'électrolyte vers l'un des diffuseurs 10a, 10b, l'autre (au centre) 12' assurant le retour de l'électrolyte entraînant les précipités d'hydroxydes et la chaleur produite par la réaction.

Une électrode métallique outil 9' portée à un potentiel cathodique, de forme cylindrique, creuse, est située à l'intérieur de la pièce à usiner, portée à un potentiel anodique, délimitant ainsi un volume de forme annulaire entre anode et cathode ; à l'extrémité inférieure et à l'extrémité supérieure de ladite électrode se trouvent respectivement un diffuseur inférieur 10a et un diffuseur supérieur 10b sous forme de plaques transversales percées de canaux radiaux, assurant, pour le diffuseur 10b l'arrivée de l'électrolyte ou d'un produit de rinçage dans le volume anode-cathode, et pour 10a le retour de ces fluides. Ces diffuseurs 10a et 10b sont reliés aux conduits 11' et 12'.

Des joints expansibles radialement, inférieur 13a et supérieur 13b, de forme torique, situés respectivement en-dessous du diffuseur inférieur 10a et au-dessus du diffuseur supérieur 10b, permettent d'isoler la zone à traiter et de travailler sous air ou sous eau. L'expansion radiale des joints est réalisée par traction de la partie intérieure par rapport à la partie extérieure de la cellule d'usinage grâce à un vérin.

Le volume entre anode et cathode est donc parfaitement isolé du reste du tube.

Le courant circule alors à travers l'électrolyte, permettant la dissolution anodique de la surface interne de la pièce tubulaire, avec pour effet la formation de précipités d'hydroxydes non solubles.

L'électrolyte mis en oeuvre pour cette dissolution anodique contient comme substance active unique du nitrate de lithium ; en particulier, l'électrolyte ne renferme pas d'ions sodium Na⁺ et d'ions chlorure Cl⁻ ; les avantages de cet électrolyte sont déterminants.

Le lithium sous forme d'un composé alcalin est bien moins néfaste pour la structure métallurgique de la pièce que le sodium sous forme d'un composé alcalin. En effet, l'hydroxyde de lithium (LiOH), base forte, a une solubilité relativement limitée : il précipite en cas de saturation. Les risques de concentrations locales excessives en LiOH entraînant une corrosion sont donc limités.

L'acide nitrique (HNO₃), acide oxydant fort est connu comme passivant des aciers.

Il en résulte que l'électrolyte (Li⁺, NO₃⁻) se caractérise par son innocuité vis-à-vis du métal usiné.

Les conductivités limites équivalentes des ions composant l'électrolyte (Li⁺, NO₃⁻) permettent d'obtenir une conductivité élevée et stable sur une large gamme de pH, donc d'usiner sous de fortes densités de courant.

Or, la vitesse de mise en solution (ou vitesse d'usinage) de la surface à traiter dépend de la densité de courant appliquée. L'électrolyte mis en oeuvre permet donc l'obtention de vitesses d'usinage élevées.

L'usinage tel que réalisé permet ainsi l'obtention rapide d'un excellent état de surface et ne modifie pas la structure métallurgique de la pièce.

Le procédé d'usinage mis en oeuvre dans la cellule d'usinage ci-dessus décrite génère des déchets solides constitués de boues d'hydroxydes dans la solution d'électrolyte. La boucle d'usinage réalisée selon l'invention facilite le traitement des effluents et l'élimination par filtration de ces hydroxydes insolubles.

Sur la figure 4 sont représentés les éléments de la boucle d'usinage.

La cellule d'usinage décrite ci-dessus est représentée en 19, ladite cellule est alimentée en courant par le générateur 20. Les opérations qui seront décrites ci-après se succèdent dans la boucle. On prépare la solution d'électrolyte contenant du nitrate de lithium dans la cuve 14 par injection d'eau et de réactifs provenant respectivement de cuves 16 et 15.

On met la solution d'électrolyte en circulation dans la boucle, par exemple grâce à une pompe 17.

On filtre la solution de ses précipités d'hydroxydes, par exemple par des filtres 18.

Les filtres 18 se chargent d'hydroxydes métalliques ; après pressage de ces filtres, on récupère environ six grammes de boues d'hydroxydes pour un gramme de métal dissous. L'électrolyte filtré repart dans la boucle de circulation.

Au cours de l'usinage, le pH de la solution d'électrolyte varie, et on peut réguler le pH de ladite solution en injectant un agent de contrôle de pH (par exemple de l'acide nitrique) par exemple par l'intermédiaire de la cuve 21.

A l'issue de l'usinage, on rince les éléments 17, 18, 19 et la pièce usinée par 15.

Durant l'usinage électrolytique, il se produit un dégagement d'hydrogène non négligeable. Il convient d'extraire de la cuve 14 ce gaz au moyen d'une tuyauterie pour le transporter vers le circuit d'épuration de la centrale en vue d'un rejet ultérieur à l'air libre. En effet, l'hydrogène est indésirable dans une centrale nucléaire en raison des risques d'explosion.

Cet usinage électrochimique peut s'appliquer aux pénétrations de fond de cuve et aux traversées de couvercle de cuve. Pour effectuer la mise en place de la cellule d'usinage électrochimique à l'intérieur de ces tubes, on peut utiliser le dispositif représenté sur la figure 5.

Sur la figure 5, on voit l'outillage nécessaire à l'accès aux pénétrations de fond de cuve. La procédure est la même que pour les inspections télévisuelles des pénétrations de fond de cuve.

Tout d'abord, une partie des équipements internes est enlevée.

La tige 22 permet la montée et la descente, afin que la cellule 24 pénètre et se déplace dans la traversée de fond de cuve 5.

L'outillage d'accostage télécommandé depuis la passerelle d'intervention est contenu dans le dispositif 23, et le cône 25 permet l'accostage et le centrage.

L'outillage d'intervention est le même pour les adaptateurs de couvercle de cuve dont on a préalablement retiré la manchette thermique.

Le procédé selon l'invention permet l'obtention de vitesses d'usinage élevées et une grande précision d'usinage comme l'illustre l'exemple décrit ci-dessous.

Un alliage nuance NC15Fe a été usiné par usinage électrochimique tel que décrit de manière générale en référence aux figures 1 et 3.

L'usinage amenant le diamètre intérieur d'un cylindre de 15 mm à 17 mm sous une densité de courant de 12 A/cm² a été réalisé avec une vitesse d'usinage de l'ordre de 10 cm³/mn avec une solution ayant une concentration en nitrate de lithium de 100 g/l.

Le procédé suivant l'invention s'applique non seulement à l'usinage d'une couche superficielle défectueuse à l'intérieur d'un adaptateur traversant le fond ou le couvercle de la cuve d'un réacteur nucléaire, mais également à l'usinage de la surface interne de pièces métalliques tubulaires de tout type pour générer une nouvelle surface ayant des caractéristiques géométriques et physiques définies et à l'usinage de pièces d'autres formes.

Cet usinage peut être réalisé uniquement au niveau de défauts isolés tels que des fissures avant un rechargement en métal sain du métal fissuré ou suivant l'ensemble d'une surface de la pièce.

On peut effectuer un usinage suivant le procédé de l'invention sur une surface d'une pièce avant de la soumettre à un traitement de mise en compression, de détensionnement par martelage ou d'électrodéposition.

Le procédé peut être appliqué à des pièces planes, ou de formes complexes sur tout matériau métallique électriquement conducteur.

## Revendications

1. Procédé d'usinage électrochimique avec enlèvement de matière de matériaux métalliques consistant à mettre un électrolyte en circulation au contact de la surface à usiner, à porter ladite surface à un potentiel anodique, à mettre une électrode outil portée à un potentiel cathodique, au voisinage de la pièce et à faire passer un courant entre l'électrode outil et la pièce à usiner, caractérisé en ce que l'électrolyte mis en oeuvre contient comme substance active unique du nitrate de lithium (LiNO₃).

2. Procédé suivant la revendication 1, caractérisé en ce que :
- la concentration de l'électrolyte en nitrate de lithium est comprise entre 20 g/l et 2350 g/l, et
- la densité de courant traversant l'électrolyte est comprise entre 2 A/cm² et 4000 A/cm².

3. Procédé suivant la revendication 2, caractérisé en ce que :
- la concentration de l'électrolyte en nitrate de lithium est comprise entre 50 g/l et 250 g/l, et
- la densité de courant traversant l'électrolyte est comprise entre 5 A/cm² et 50 A/cm².

4. Procédé suivant la revendication 1, 2 ou 3, caractérisé en ce que:
(i) on prépare l'électrolyte dans une cuve (14) par injection d'eau et de réactifs,
(ii) on met la solution d'électrolyte en circulation dans une boucle de circulation,
(iii) on filtre la solution de ses précipités d'hydroxydes,
(iv) on renvoie l'électrolyte filtré dans la boucle, et
(v) on régule le pH de la solution par injection d'un agent de contrôle du pH.

5. Procédé suivant l'une quelconque des revendications 1 à 4, caractérisé en ce qu'à l'issue de l'usinage, on rince l'espace entre anode et cathode et la surface usinée par circulation d'un liquide de rinçage dans cet espace.

6. Procédé suivant l'une quelconque des revendications 1 à 5, appliqué à l'usinage de la surface interne cylindrique d'une pièce tubulaire telle qu'une traversée de fond de cuve (5) d'un réacteur nucléaire à eau sous pression, ou un adaptateur (8) traversant le couvercle de la cuve, caractérisé en ce que l'électrolyte est mis en circulation dans un espace étanche de forme annulaire situé entre l'électrode outil (9') de forme cylindrique et la surface interne de la pièce à usiner.

7. Dispositif pour la mise en oeuvre du procédé selon la revendication 6, dans lequel la cellule d'usinage comprend une électrode outil (9') portée à un potentiel cathodique de forme cylindrique dimensionnée de manière à être logée à l'intérieur de la pièce à usiner, des conduits (11', 12') permettant l'arrivée et le retour de l'électrolyte, deux diffuseurs (10a, 10b), assurant la circulation de l'électrolyte et du liquide de rinçage dans l'intervalle anode/cathode, des joints commandés (13a, 13b) permettant d'isoler l'intervalle anode/cathode à traiter par rapport au reste du tube.

## Claims

1. Process for electrochemical etching of metallic materials, with removal of material, which consists of causing an electrolyte to circulate in contact with the surface which is to be etched, bringing said surface to an anodic potential, placing a tool electrode which has been brought to a cathodic potential close to the part which is to be etched and passing a current between the tool electrode and the part, characterised in that the electrolyte used contains lithium nitrate (LiNO₃) as the sole active substance.

2. Process according to claim 1, characterised in that:
the concentration of lithium nitrate in the electrolyte is between 20 g/l and 2350 g/l, and
the current density passing through the electrolyte is between 2 A/cm² and 400 A/cm².

3. Process according to claim 2, characterised in that:
the concentration of lithium nitrate in the electrolyte is between 50 g/l and 250 g/l, and
the current density passing through the electrolyte is between 5 A/cm² and 50 A/cm².

4. Process according to claim 1, 2 or 3, characterised in that:
(i) the electrolyte is prepared in a tank (14) by injecting water and reagents,
(ii) the electrolyte solution is circulated in a circulation loop,
(iii) the solution is filtered to remove its hydroxide precipitates,
(iv) the filtered electrolyte is returned to the loop, and
(v) the pH of the solution is regulated by injecting a pH controlling agent.

5. Process according to any one of claims 1 to 4, characterised in that, at the end of the etching, the space between anode and cathode and the etched surface is rinsed by circulating a rinsing liquid in this space.

6. Process according to any one of claims 1 to 5, used for etching the cylindrical inner surface of a tubular part such as the base passage of a tank (5) in a pressurised water nuclear reactor, or an adapter (8) passing through the lid of the tank, characterised in that the electrolyte is circulated in a sealed annular apace located betwen the cylindrical tool electrode (9') and the inner surface of the part to be etched.

7. Apparatus for carrying out the process according to claim 6, wherein the etching cell comprises a tool electrode (9') brought to a cathodic potential, which is cylindrical in shape and of such dimensions as to be accommodated inside the part to be etched, ducts (11', 12') enabling the electrolyte to be supplied and taken away, two diffusers (10a, 10b) ensuring the circulation of the electrolyte and the rinsing liquid in the anode/cathode gap, whilst controlled joints (13a, 13b) make it possible to isolate the anode/cathode gap which is to be treated from the rest of the tube.

## Patentansprüche

1. Verfahren zur chemischen Bearbeitung metallischer Materialien, das darin besteht, ein in Umlauf befindliches Elektrolyt in Berührung mit der zu bearbeitenden Oberfläche zu bringen, an die genannte Oberfläche ein anodisches Potential anzulegen, eine Werkzeugelektrode, die an ein katodisches Potential angelegt ist, in die Nähe des Werkstücks zu bringen und einen Strom zwischen der Werkzeugelektrode und dem zu bearbeitenden Werkstück hindurchströmen zu lassen, dadurch **gekennzeichnet**, daß das eingesetzte Elektrolyt als einzige, aktive Substanz Lithiumnitrat (LiNO₃) enthält.

2. Verfahren nach Anspruch 1, dadurch **gekennzeichnet**, daß
- die Konzentration des Elektrolyts an Lithiumnitrat zwischen 20 g/l und 2350 g/l liegt, und
- die Dichte des Stromes, der durch das Elektrolyt strömt, zwischen 2 A/cm² und 4000 A/cm² liegt.

3. Verfahren nach Anspruch 2, dadurch **gekennzeichnet**, daß
- die Konzentration des Elektrolyts an Lithiumnitrat zwischen 50 g/l und 250 g/l liegt, und
- die Dichte des Stroms, der durch das Elektrolyt strömt, zwischen 5 A/cm² und 50 A/cm² liegt.

4. Verfahren nach Anspruch 1, 2 oder 3, dadurch **gekennzeichnet**, daß
(i) man das Elektrolyt in einem Bottich (14) durch Einspritzen von Wasser und Reagenzien herstellt,
(ii) man die Elektrolytlösung in einem Kreislauf in Umlauf versetzt,
(iii) man aus der Lösung ihre Hydroxidausfällungen herausfiltert,
(iv) man das filtrierte Elektrolyt wieder in den Kreislauf zurückführt, und
(v) man den pH-Wert der Lösung durch Einspritzen eines Mittels zur Steuerung des pH-Wertes reguliert.

5. Verfahren nach irgendeinem der Ansprüche 1 bis 4, dadurch **gekennzeichnet**, daß man am Ende der Bearbeitung den Raum zwischen der Anode und der Kathode sowie die bearbeitete Fläche durch Umlauf einer Spülflüssigkeit in diesem Raum spült.

6. Verfahren nach irgendeinem der Ansprüche 1 bis 5, angewandt auf die Bearbeitung der inneren, zylindrischen Oberfläche eines rohrförmigen Teils wie etwa einer Bodendurchführung eines Behälters (5) eines Druckwasser-Kernreaktors, oder eines Adapters (8), der den Deckel des Behälters durchsetzt, dadurch **gekennzeichnet**, daß das Elektrolyt in einem dichten, ringförmigen Raum in Umlauf versetzt wird, der zwischen der Werkzeugelektrode (9') mit zylindrischer Form und der Innenoberfläche des zu bearbeitenden Werkstücks gelegen ist.

7. Vorrichtung zur Durchführung des Verfahrens nach Anspruch 6, worin die Bearbeitungszelle eine an ein kathodisches Potential angelegte Werkzeugelektrode (9') mit zylindrischer Form aufweist, die derart bemessen ist, daß sie im Inneren des zu bearbeitenden Werkstücks angelegen ist, wobei Leitungen (11', 12') das Einleiten und die Rückführung des Elektrolyts gestatten und zwei Diffusoren (10a, 10b) den Umlauf des Elektrolyts und der Spülflüssigkeit in den Zwischenraum zwischen Anode und Kathode sicherstellen, wobei gesteuerte Dichtungen (13a, 13b) es gestatten, den Zwischenraum von Anode und Kathode, der zu behandeln ist, in bezug auf den Rest des Rohres zu isolieren.
